# FASCICULE DE BREVET EUROPEEN

(11) **EP 1 733 515 B1**
(45) Date de publication et mention de la délivrance du brevet: **11.06.2008**
(21) Numéro de dépôt: 04702723.0
(22) Date de dépôt: 16.01.2004
(51) Int. Cl.: H04L 12/56, H04L 29/08, H04L 29/06, H04L 12/26

(54) **PROCEDE ET SYSTEME DE SELECTION DE PAQUETS EN FONCTION DU VOLUME EMIS PAR CONNEXION**
VERFAHREN UND SYSTEM ZUR SORTIERUNG VON PAKETEN, DIE AUF DEM VERSCHICKTEN VOLUMEN PRO VERBINDUNG BASIERT
METHOD AND SYSTEM FOR SELECTING PACKETS ACCORDING TO VOLUME TRANSMITTED BY CONNECTION

(43) Date de publication de la demande: 20.12.2006
(73) Titulaire: FRANCE TELECOM, 75015 Paris (FR)
(72) Inventeur: BROWN, Patrick, F-06800 Cagnes sur Mer (FR); AYESTA, Urtzi, F-31500 Toulouse (FR); AVRATCHENKOV, Konstantin, Le Trianon, Bât. A, F-06160 Juan Les Pins (FR); NYBERG, Eva, F-00180 Helsinki (FI)
(74) Mandataire: Blot, Philippe Robert Emile
(86) Numéro de dépôt international: PCT/FR2004/000094
(87) Numéro de publication internationale: WO 2005/079019

(56) Documents cités:
- US-A1- 2003 043 802
- DEFENSE ADVANCED RESEARCH PROJECTS AGENCY INFORMATION SCIENCES INSTITUTE UNIVERSITY OF SOUTHERN CALIFORNIA: "RFC: 793, TRANSMISSION CONTROL PROTOCOL DARPA INTERNET PROGRAM PROTOCOL SPECIFICATION" INTERNET ARTICLE, septembre 1981 (1981-09), XP015006775
- ESTAN C; VARGHESE G, DEPT. OF COMPUT. SCI. & ENG., CALIFORNIA UNIV., SAN DIEGO, CA; USA: "New directions in traffic measurement and accounting: focusing on the elephants, ignoring the mice" ACM TRANSACTIONS ON COMPUTER SYSTEMS, [Online] vol. 21, no. 3, août 2003 (2003-08), pages 270-313, XP002298877 ISSN: 0734-2071 Extrait de l'Internet: URL:http://delivery.acm.org/10.1145/860000 /859719/p270-estan.pdf?key1=859719&key2=57 12266901&coll=portal&dl=ACM&CFID=3957717&C FTOKEN=38351001> [extrait le 2004-10-01]
- N. BROWNLEE; THE UNIVERSITY OF AUCKLAND; C. MILLS; GTE LABORATORIES, INC; G. RUTH; GTE INTERNETWORKING: "RFC 2722, Traffic Flow Measurement: Architecture" INTERNET ARTICLE, octobre 1999 (1999-10), XP015008505

## Description

La présente invention concerne les transmissions d'informations sur un réseau de transmissions de paquets de données de type TCP/IP et plus particulièrement la gestion des paquets TCP/IP.

II est bien connu que la transmission d'informations sur Internet qui utilise le protocole TCP/IP s'effectue sous la forme d'une transmission de paquets ou datagramme d'un format déterminé et normalisé. Une connexion entre un appareil émetteur et un appareil récepteur se caractérise donc par une succession d'échanges de paquets dont le rôle est d'abord d'initialiser la connexion puis de transmettre les données échangées.

Or le routage de ces paquets va s'effectuer de façon variable en fonction de la charge du réseau. En conséquence, des paquets émis avant d'autres peuvent être reçus après ceux-ci.

Afin de permettre à l'appareil récepteur de connaître l'ordre d'émission des paquets et donc l'ordre logique des données qu'ils contiennent, les protocoles TCP/IP prévoient que chaque paquet TCP/IP contient dans son en-téte un numéro d'ordre ou valeur de comptage.

En règle générale, cette valeur est initialisée au début de la connexion par l'appareil émetteur à une valeur aléatoire, dans un but de sécurité, afin qu'un tiers ne puisse pas, sinon difficilement, s'introduire dans l'échange en simulant la création de paquets "authentiques". Puis ce numéro est incrémenté de 1, ou du nombre de bits/octets de données transmis dans ce paquet, à chaque émission d'un nouveau paquet.

Par ailleurs, se pose régulièrement le problème de l'optimisation des ressources du réseau à la charge de celui-ci et donc de l'augmentation des performances des appareils qui doivent traiter les paquets comme, par exemple, les routeurs.

Différentes études ont montré qu'en permettant à des petits travaux de s'exécuter prioritairement à des travaux longs sur un système à ressource limitée, tel qu'un système informatique, un routeur ou un lien de transmission de données, les performances moyennes de ce système peuvent en être grandement améliorées par rapport à d'autres modes de gestion.

La question qui se pose est alors de discriminer les petits travaux des travaux longs. Or, ceci s'avère, à l'heure actuelle, quasiment impossible en cours d'exécution.

Une approximation relativement efficace consiste alors à traiter prioritairement les travaux ayant été le moins servis, par exemple, qui ont consommé le moins de temps de calcul.

Dans le cas des transmissions de données, cela revient à considérer que les connexions ayant été traitées depuis plus longtemps sans être terminées sont, en moyenne, plus longues que les autres.

Des études ont en effet montré que dans le cas d'Internet, un paramètre efficace d'optimisation était le volume d'information transmis, ou son équivalent le nombre de paquets transmis: un fichier dont la transmission n'est toujours pas terminée après la transmission d'un volume X, sera en moyenne plus long qu'un fichier qui n'est toujours pas terminé après la transmission d'un volume x, x étant inférieur à X.

Différents mécanismes ont été proposés pour exploiter cette propriété afin d'améliorer les performances moyennes d'un système. La mise en oeuvre d'un mécanisme de gestion des priorités se base sur la gestion des volumes déjà transmis par les connexions. Elle est réalisée par la mise en place de compteurs, un par connexion, qui gardent en mémoire les volumes de données déjà transmis et qui sont comparés entre eux ou avec une valeur prédéterminée pour affecter les priorités de traitement.

Le document "New directions in traffic measurement and accounting : focusing on the elephants, ignoring the mice », : ESTAN C ; VARGHESE G, DEPT: OF COMPUT. SCI. & ENG., CALIFORNIA UNIV., SAN DIEGO, CA ; USA ; ACM TRANSACTIONS ON COMPUTER SYSTEMS, [Online] vol. 21, no.3 août 2003 (2003-08), pages 270-313, XP002298877 ISSN : 0734-2071) décrit un procédé pour identifier les flux à fort traffic.

Ces systèmes ont l'inconvénient de nécessiter des emplacements de stockage pour pouvoir installer un compteur par connexion, ainsi que des moyens de traitement d'informations importants puisque, à l'arrivée de chaque paquet, il faut mettre à jour le compteur correspondant, ou le créer si c'est une nouvelle connexion, le comparer pour déterminer la priorité à accorder à ce paquet et, lorsque la connexion est terminée (évènement qu'il est souvent difficile de déterminer) détruire le compteur,

Le but de l'invention est donc de remédier à ces inconvénients en proposant un mécanisme simple et rapide à exécuter.

L'objet de l'invention est donc un procédé de génération de paquets selon la revendication 1, ainsi qu'un procédé de tri de paquets selon la revendication 8.

L'objet de l'invention est aussi un système de génération de paquets selon la revendication 9,
ainsi qu'un système de réception de paquets selon la revendication 12.

Des caractéristiques supplémentaires sont énoncées dans les revendications dépendantes.

L'invention a en outre pour objet un procédé de réception de paquets selon la revendication 14.

L'invention sera mieux comprise à la lecture de la description qui va suivre, faite à titre d'exemple, et en.références aux dessins annexés dans lesquels :
- la figure 1 représente un schéma d'ensemble d'un réseau TCP/lP ;
- la figure 2 représente un schéma simplifié d'un en-tête de paquet TCP/IP selon la norme ;
- la figure 3 représente un schéma symbolique de la répartition des valeurs initiales selon l'invention ;
- la figure 4 représente un schéma de la valeur de comptage selon l'invention dans une représentation binaire ;
- la figure 5 représente un schéma d'un système amont de génération de paquets ;
- la figure 6 représente un schéma d'un système aval de transmission de paquets.

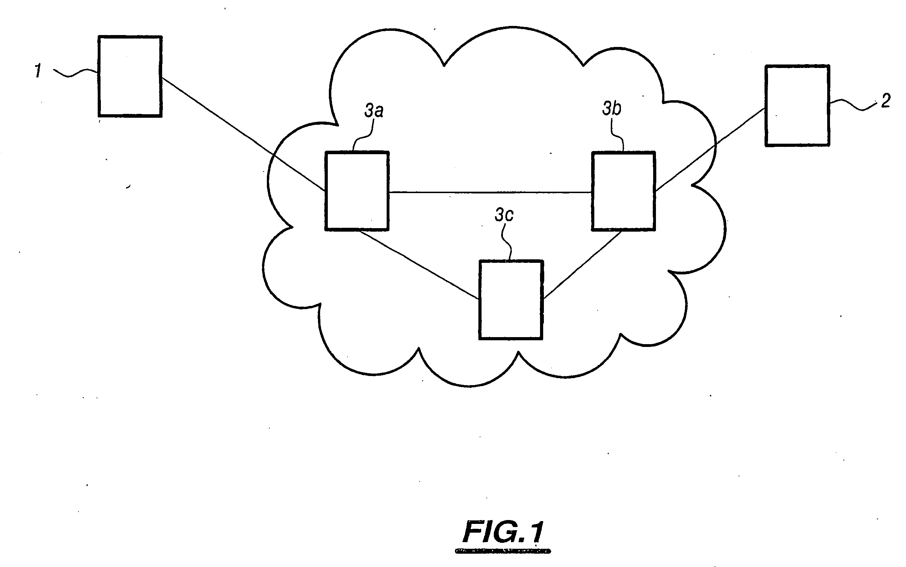

Dans un réseau TCP/IP comme Internet, figure 1, des ordinateurs amont 1 établissent des connexions avec des ordinateurs 2 par l'intermédiaire d'équipements de réseaux comme les routeurs 3a, 3b, 3c dont le rôle est d'acheminer les paquets constituant la connexion entre les ordinateurs 1 et 2. Les équipements de réseaux 3a, 3b, 3c seront appelés appareils aval dans la suite de la description.

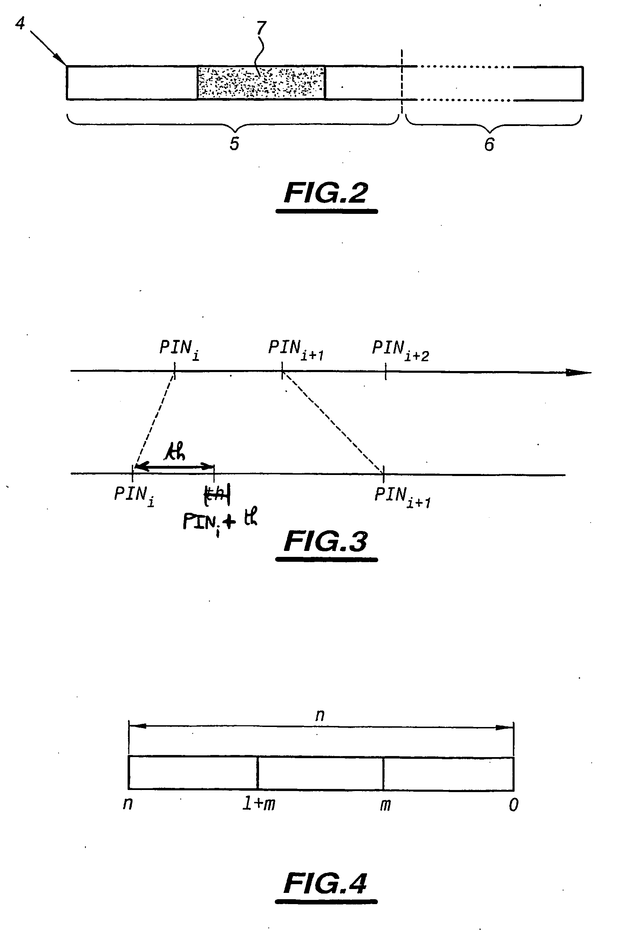

Un paquet ou datagramme, figure 2, est composé d'un en-tête 5 comportant des champs prédéfinis nécessaires au bon acheminement de ce paquet comme, par exemple, l'adresse de l'ordinateur émetteur et celle de l'ordinateur récepteur, et des données 6 transmises.

Parmi les nombreux champs de l'en-tête 5 se trouve un champ de comptage 7. Celui-ci est généré par l'appareil émetteur à partir d'une valeur de comptage initiale en ayant incrémenté celle-ci, soit d'une unité par paquet émis, soit du nombre de bits ou octets de données émis, depuis le début de la connexion.

L'appareil de réception 2 peut ainsi vérifier qu'il a reçu correctement toutes les données et les remettre en ordre si nécessaire.

Dans l'implémentation ici décrite du procédé de l'invention, la valeur de comptage initiale est choisie aléatoirement à partir d'un nombre restreint et prédéfini de valeurs de comptage PIN₁, PIN₂, ..., PINₙ, constituant ainsi un ensemble de valeurs initiales prédéterminées.

Comme expliqué ci-dessous, la différence entre deux valeurs initiales consécutives doit être très supérieure à la valeur de seuil prédéterminée th qui sert à discriminer les paquets.

Cette liste de valeurs de comptage initiales est aussi connue des appareils avals. Ainsi, lorsqu'un paquet arrive, l'appareil aval estime le volume émis sur la connexion en faisant la différence entre la valeur de comptage du paquet et la valeur de comptage initiale de la liste qui lui est immédiatement inférieure.

Si le volume ainsi estimé est inférieur à la valeur de seuil prédéterminée th alors le paquet fait partie d'une connexion "courte" et reçoit donc une priorité élevée, sinon il fait partie d'une connexion "longue" et reçoit alors une priorité basse.

Il est remarquable de noter que si la connexion est suffisamment longue, la valeur de comptage courante peut atteindre et dépasser la valeur de comptage initiale PINᵢ₊₁ qui, dans la liste, est immédiatement supérieure à la valeur de comptage initiale PINᵢ, utilisée pour démarrer la connexion. De ce fait, l'appareil aval calcule alors la différence entre la valeur de comptage courante et PINᵢ₊₁ et non PINᵢ, ce qui a pour effet de classer, à tort, le paquet comme appartenant à une connexion courte, et ceci tant que cette nouvelle différence n'est pas supérieure à la valeur prédéterminée th.

Ce classement erroné a, en fait, peu d'impact sur le fonctionnement de la gestion des priorités. En effet, la distribution des volumes de connexions suit une loi de Pareto. Ainsi, 80% du volume est généré par 20% des connexions. En plaçant judicieusement le seuil prédéterminé, ces 20%, ou moins, seront considérés comme des connexions longues.

D'autre part, l'erreur ne se produit que quand un nombre de paquets égal ou supérieur à PINᵢ₊₁ - PINᵢ ont déjà été transmis, différence qui est largement supérieure à la valeur de seuil prédéterminée par le choix judicieux de ces valeurs de comptage initiales.

En conséquence, les paquets classés de manière erronée sont doublement rares : ils appartiennent à des connexions rares et ils représentent une faible proportion des paquets émis par ces connexions.

L'invention permet ainsi avantageusement de trier les paquets en fonction du volume émis par la connexion correspondante sans avoir à gérer un compteur spécifique à cette connexion dans chaque appareil aval.

Une variante d'implémentation de l'invention consiste à choisir les valeurs de comptage initiales de telle sorte qu'une zone de I bits du compteur soit toujours initialisée à zéro.

Pour ce faire, figure 4, le compteur et ses valeurs associées, peut être représenté sous forme d'un champ de n bits et peut donc prendre 2ⁿ valeurs distinctes.

De plus, la valeur de seuil prédéterminée th est choisie pour être égale à une puissance de 2 moins 1, soit de 2^{m}-1. En représentation binaire, th a le bit de position m positionné à 0 et les autres bits de poids plus faibles positionnés à un.

Par hypothèse, la valeur de seuil prédéterminée th est très inférieure à la valeur maximale possible du compteur, soit 2ⁿ.

Comme expliqué ci-dessus, les valeurs de comptage initiales doivent, elles aussi, être très supérieures à th. Par hypothèse, il est donc possible de les choisir supérieures à 2^{l+m} et telles que le champ compris entre le bit de poids m et le bit de poids I+m-1 soit initialisé à zéro. Elles sont donc choisies préférentiellement parmi les multiples de 2^{l+m}.

Ainsi, lors du processus d'incrémentation de la valeur de comptage, au moins un des bits du champ [2^{m}, 2^{1+m}[ est positionné à 1 quand la valeur de seuil prédéterminée est atteinte.

Ainsi la différence effectuée par l'appareil aval se fait sous la forme d'une comparaison à zéro sur le champ correspondant pour déterminer si le paquet appartient à une connexion courte ou longue, sans qu'il soit nécessaire de maintenir une table des valeurs de comptage initiales.

La gestion des priorités est ainsi faite par un calcul extrêmement simple qui résout très avantageusement les problèmes posés par l'art antérieur.

Dans le mode de réalisation de l'invention décrit ci-dessus, les bits de poids faible des valeurs de comptage initiales, c'est-à-dire ceux de poids inférieur à m, sont également initialisés à zéro. Il y a ainsi 2^{n-(l+m)} valeurs initiales possibles puisque elles ont été choisies parmi les multiples de 2^{l+m}.

Cependant, il peut être nécessaire, pour des raisons de sécurité, d'augmenter le nombre de valeurs du comptage initiales possibles, afin de diminuer la probabilité de tirer deux nombres identiques. En effet, si le compteur est un compteur de paquets, il est possible de choisir th, et donc m, petit, et donc lé nombre de valeurs initiales reste suffisamment important pour que le tirage aléatoire soit efficace. Par contre, si le compteur est un compteur d'octets de données, comme dans la norme TCP, th doit être beaucoup plus important ce qui limite d'autant le nombre de valeurs de comptage initiales.

A titre d'exemple, pour des paquets de 1024 octets qui est une valeur très souvent rencontrée sur Internet, une connexion est considérée comme longue quand elle comporte plus de 5 paquets. Pour un comptage de paquets, cela veut dire que m est choisi égal à 2 ou 3. Mais dans le cas d'un comptage d'octets de données transmises, m devient égal à 12 ou 13.

Dans ce dernier cas, une variante du mode de réalisation de l'invention consiste à tirer un certain nombre de bits de poids faible dans le numéro de séquence initial. En choisissant des poids très inférieurs à celui de la valeur de seuil prédéterminé, par exemple parmi les bits de poids inférieur à la partie entière du logarithme de base 2 de la taille maximale des données d'un paquet autorisée sur le réseau, on introduit qu'une erreur minime sur le déclenchement de la valeur de seuil prédéterminée pour la connexion correspondante. En effet, en reprenant l'exemple d'un compteur d'octets de données fonctionnant pour des paquets ayant au plus 1024 octets de données, si les bits de poids inférieur à 10 sont tirés aléatoirement, il est aisé de constater que l'erreur introduite porte sur au plus un paquet.

Ainsi, le procédé selon l'invention permet avantageusement de simplifier la détection des tailles des connexions tout en maintenant le tirage aléatoire des valeurs initiales.

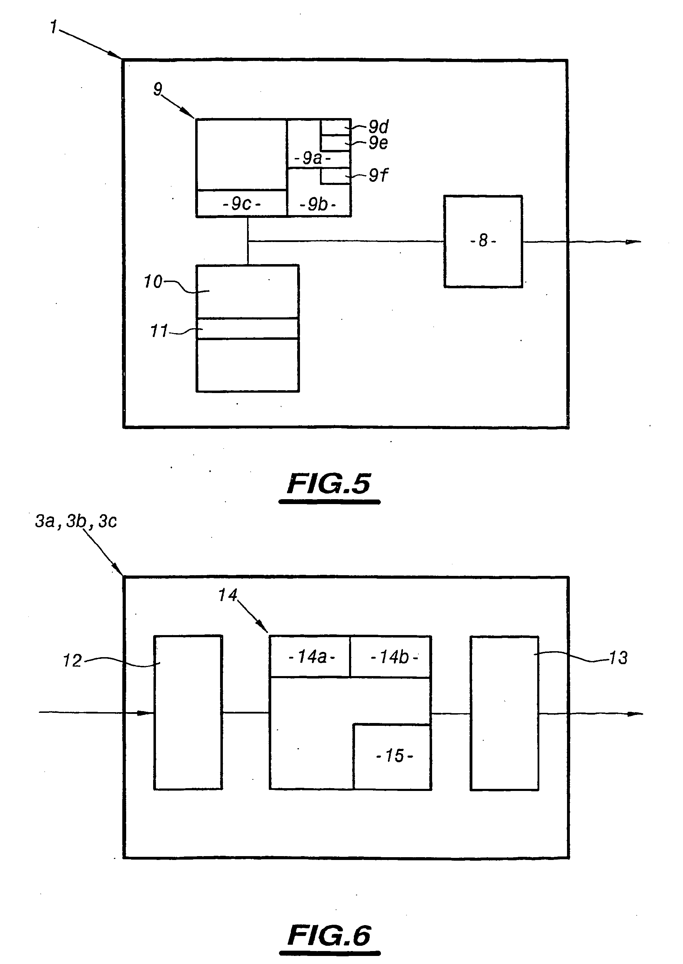

Pour mettre en oeuvre le procédé selon l'invention, l'appareil amont, émetteur des paquets, comporte, figure 5, des moyens d'émission 8 de ces paquets connectés au réseau, tels que, par exemple, une carte réseau ethemet. Une unité de traitement d'informations 9 est connectée à ces moyens d'émission 8 et à des moyens de stockage 10 d'informations comme, par exemple, de la mémoire vive. Une adresse de cette mémoire tient lieu de registre 11 pour compter les paquets, ou les octets, émis. L'unité de traitement d'informations 9 comporte des moyens d'initialisation 9a de ce registre 11 au début de la connexion à une valeur initiale de comptage choisie selon les modalités expliquées précédemment. Ces moyens d'initialisation 9a comportent également des moyens de sélection 9d de la valeur initiale parmi un ensemble de valeurs prédéterminées et des moyens 9e de tirage aléatoire des bits de poids faible de cette valeur initiale. L'unité de traitement d'informations 9 comporte également des moyens d'incrémentation 9b du contenu de ce registre 11 à chaque émission d'un nouveau paquet, cette incrémentation étant soit d'une unité, dans le cas d'un comptage des paquets, soit du nombre d'octets de données transmis dans le paquet. Dans le mode de réalisation préférée de l'invention, ces moyens d'incrémentation 9b comportent des moyens de basculement 9f à la valeur 1 d'au moins un bit du champ de 1 bit. L'unité de traitement d'informations 9 comporte également des moyens de copie 9c de la valeur de ce registre 11 dans le champ de la valeur de comptage courante de l'entête du paquet.

L'appareil aval, figure 6, est un système de transmission de paquets. Il comporte donc des moyens de réception 12 de paquets provenant de l'appareil amont et des moyens d'émission 13 de ces paquets vers leur destination finale. Ces moyens de réception 12 et d'émission 13 sont connectés à une unité de traitement d'informations 14 qui comporte en outre une table 15 de valeurs de comptage initiales et des moyens de calcul 14a de la différence entre la valeur de comptage courante du paquet et la valeur initiale de la table immédiatement inférieure à celle-ci. Cette unité de traitement d'informations 14 comporte en outre des moyens de comparaison 14b entre cette différence et la valeur de seuil prédéterminée th.

Bien entendu, l'homme du métier est à même de transposer sans difficulté l'invention à tout protocole de réseau utilisant des paquets numérotés par ordre de transmission.

## Revendications

1. Procédé de génération de paquets de données exécuté par un dispositif amont, les paquets étant destinés à être transmis à travers au moins une connexion établie via un réseau, comportant :
- au début d'une connexion, une étape d'initialisation de la valeur d'un compteur compris dans le dispositif amont, apte à stocker un nombre de paquets émis, à une valeur initiale de comptage,
- une étape d'incrémentation de la valeur de ce compteur à chaque création d'un nouveau paquet,
- une étape de copie de la valeur courante de ce compteur dans l'entête du nouveau paquet,
le procédé étant tel que ladite valeur initiale de comptage est sélectionnée parmi un ensemble de valeurs initiales prédéterminées tel que la différence entre deux valeurs initiales consécutives de cet ensemble soit très supérieure à un seuil prédéterminé.

2. Procédé selon la revendication 1, **caractérisé en ce que**, la valeur courante du compteur se présentant sous la forme binaire d'un enregistrement de n bits, l'ensemble des valeurs initiales de comptage est tel qu'un champ de 1 bits de la valeur de comptage, I étant strictement inférieur à n, est systématiquement initialisé à zéro, ce champ étant positionné de telle sorte que, quand le nombre de paquets émis atteint le seuil prédéterminé, au moins un bit de ce champ prend la valeur 1.

3. Procédé selon la revendication 2, **caractérisé en ce que**, le champ de 1 bits est positionné entre un bit de rang m et un bit de rang m+I de la valeur de comptage, et les valeurs de comptage initiales sont supérieures à 2^{I+m}.

4. Procédé selon la revendication 3, **caractérisé en ce que** le seuil prédéterminé est égal à 2^{m} -1.

5. Procédé selon la revendication 4, **caractérisé en ce que** les valeurs initiales de comptage sont des multiples de 2^{1+m}.

6. Procédé selon la revendication 4, **caractérisé en ce que** les bits de poids faible des valeurs initiales de comptage sont choisis, aléatoirement parmi les bits de rang inférieur à t, t étant strictement inférieur à m.

7. Procédé selon la revendication 6, **caractérisé en ce que** le nombre de bits de poids faible t est la partie entière du logarithme en base 2 de la taille maximale de paquets autorisée sur le réseau.

8. Procédé de tri de paquets de données exécuté par un dispositif aval, lesdits paquets ayant été générés par au moins un dispositif amont (1) au moyen d'un procédé de génération de paquets selon l'une quelconque des revendications 1 à 7 puis transmis au dispositif aval à travers des connexions établies via un réseau, le procédé de tri comprenant,
- une étape de réception par le dispositif aval (3a, 3b, 3c) de chaque paquet IP de chaque connexion;
- une étape de comparaison par le dispositif aval (3a, 3b, 3c) d'un seuil prédéterminé de quantités de données transmises avec la différence entre la valeur de comptage courante insérée dans l'entête d'un paquet reçu et la valeur initiale immédiatement inférieure de l'ensemble de valeurs initiales prédéterminées utilisé pour la génération de paquets, afin de trier les paquets correspondant à des connexions ayant transmis moins de données que le seuil prédéterminé, vis-à-vis des paquets correspondant à des connexions ayant transmis plus de données que le seuil prédéterminé.

9. Système de génération de paquets de données dans un dispositif amont, lesdits paquets étant destinés à être transmis à travers au moins une connexion établie via un réseau, comportant
- une unité de traitement d'informations (9) et
- des moyens de stockage d'informations (10) comportant au moins un compteur (11) apte à stocker un nombre de paquets émis,
l'unité de traitement d'information comportant
- des moyens d'initialisation (9a) de la valeur de ce compteur au début d'une connexion à une valeur initiale de comptage,
- des moyens d'incrémentation (9b) de la valeur de ce compteur à chaque création d'un nouveau paquet et
- des moyens de copie (9c) de la valeur courante de ce compteur dans l'entête du nouveau paquet,
tel que les moyens d'initialisation (9a) comportent des moyens de sélection (9d) de ladite valeur initiale de comptage parmi un ensemble de valeurs initiales prédéterminées tel que la différence entre deux valeurs initiales consécutives de cet ensemble soit très supérieure à un seuil prédéterminé.

10. Système de génération de paquets selon la revendication 9, **caractérisé en ce que**, la valeur de comptage courante se présentant sous forme binaire d'un enregistrement de n bits, l'ensemble des valeurs de comptage initiales est tel qu'un champ de I bits de la valeur de comptage, I étant un entier strictement inférieur à n, est systématiquement initialisé à 0.

11. Système de génération de paquets selon la revendication 10, **caractérisé en ce que** les moyens d'incrémentation (9b) comportent des moyens de basculement (9f) à la valeur un d'au moins un bit du champ de I bits quand le nombre de paquets émis dépasse le seuil prédéterminé.

12. Système de traitement de paquets de données transmis à travers au moins une connexion établie via un réseau, le système comportant des moyens de réception (12) de paquets en provenance d'un dispositif amont, et des moyens de traitement d'information (14), chaque paquet ayant dans son en-tête une valeur de comptage courante,
tel que les moyens de traitement d'information (14) comportent une table (15) de valeurs de comptage initiales et des moyens de calcul (14a) de la différence entre la valeur de comptage courante figurant dans l'entête d'un paquet reçu et la valeur initiale de la table immédiatement inférieure à cette valeur de comptage courante et des moyens de comparaison (14b) de cette différence avec un seuil prédéterminé.

13. Système de traitement de paquets selon la revendication 12, **caractérisé en ce que** les moyens de calcul de la différence et de comparaison au seuil prédéterminé effectuent une comparaison à zéro d'un champ de I bits de la valeur de comptage courante.

14. Procédé de traitement de paquets de données transmis à travers au moins une connexion établie via un réseau, le procédé comportant une étape de réception (12) de paquets en provenance d'un dispositif amont, chaque paquet ayant dans son en-tête une valeur de comptage courante,
le procédé étant tel qu'il comprend
- une étape de calcul par des moyens de traitement d'information (14) de la différence entre la valeur de comptage courante figurant dans l'entête d'un paquet reçu et la valeur initiale, immédiatement inférieure à cette valeur de comptage courante, figurant dans une table (15) de valeurs de comptage initiales, et
- une étape de comparaison de cette différence avec un seuil prédéterminé.

## Claims

1. Method for the generation of data packets by an upstream device, said packets being intended to be transmitted over at least one connection set up via a network, comprising:
- at the start of a connection, an initialization step to initialize the value of a counter included in the upstream device suitable for storing a number of transmitted packets, to an initial counting value,
- an incrementation step to increment the value of this counter with each creation of a new packet,
- a copying step to copy the current value of this counter in the header of the new packet,
the method being such that said initial counting value is selected from a set of predetermined initial values such that the difference between two consecutive initial values of this set is much higher than a predetermined threshold.

2. Method according to claim 1, **characterized in that**, with the current value of the counter appearing in the binary form of a recording of n bits, the set of initial counting values is such that a field of 1 bits of the counting value, where 1 is strictly less than n, is systematically initialized to zero, this field being positioned in such a way that, when the number of transmitted packets reaches the predetermined threshold, at least one bit of this field assumes the value 1.

3. Method according to claim 2, **characterized in that** the field of 1 bits is positioned between a bit of the order m and a bit of the order m+1 of the counting value, and the initial counting values are greater than 2^{I+m}.

4. Method according to claim 3, **characterized in that** the predetermined threshold is equal to 2^{m}-1.

5. Method according to claim 4, **characterized in that** the initial counting values are multiples of 2^{1+m}.

6. Method according to claim 4, **characterized in that** the low-order bits of the initial counting values are chosen randomly from the bits of an order less than t, where t is strictly less than m.

7. Method according to claim 6, **characterized in that** the number of low-order bits t is the entire part of the base 2 logarithm of the maximum packet size authorized on the network.

8. Method for sorting data packets carried out by a downstream device" said packets having been generated by at least one upstream device (1) by means of a method for the generation of packets according to any one of the claims 1 to 7 and then transmitted to the downstream device over connections set up via a network, said sorting method comprising:
- a reception step for reception by the downstream device (3a, 3b, 3c) of each IP packet of each connection,
- a comparison step for comparison by the downstream device (3a, 3b, 3c) of a predetermined threshold of quantities of transmitted data with the difference between the current counting value inserted in the header of a received packet and the immediately lower initial value of the set of predetermined initial values used for the generation of packets, in order to sort the packets corresponding to connections having transmitted fewer data than the predetermined threshold, vis-à-vis packets corresponding to connections having transmitted more data than the predetermined threshold.

9. System for the generation of data packets in an upstream device, said packet being intended to be transmitted over at least one connection set up via a network, comprising:
- an information-processing unit (9) and
- information-storage means (10) comprising at least one counter (11) suitable for storing a number of transmitted packets,
the information-processing unit comprising:
- initialization means (9a) to initialize the value of this counter at the start of a connection to an initial counting value,
- incrementation means (9b) to increment the value of this counter with each creation of a new packet, and
- copying means (9c) to copy the current value of this counter in the header of the new packet,
such that the initialization means (9a) comprise selection means (9d) to select said initial counting value from a set of predetermined initial values such that the difference between two consecutive initial values of this set is much higher than a predetermined threshold.

10. System for the generation of packets according to claim 9, **characterized in that**, with the current counting value appearing in the binary form of a recording of n bits, the set of initial counting values is such that a field of 1 bits of the counting value, where 1 is an integer strictly less than n, is systematically initialized to 0.

11. System for the generation of packets according to claim 10, **characterized in that** the incrementation means (9b) comprise switchover means (9f) to switch over at least one bit of the field of 1 bits to the value one when the number of transmitted packets exceeds the predetermined threshold.

12. System for the processing of data packets transmitted over at least one connection set up via a network, the system comprising means for the reception (12) of packets originating from an upstream device and information-processing means (14), each packet having a current counting value in its header,
such that the information-processing means (14) comprise a table (15) of initial counting values and calculation means (14a) to calculate the difference between the current counting value appearing in the header of a received packet and the initial value of the table immediately below this current counting value and comparison means (14b) to compare this difference with a predetermined threshold.

13. System for the processing of packets according to claim 12, **characterized in that** the means for calculating the difference and for comparison with the predetermined threshold carry out a comparison to zero of a field of 1 bits of the current counting value.

14. Method for the processing of data packets transmitted over at least one connection set up via a network, said method comprising a reception step (12) for the reception of packets originating from an upstream device, each packet having a current counting value in its header,
the method being such that it comprises:
- a calculation step to calculate by information-processing means (14) the difference between the current counting value appearing in the header of a received packet and the initial value immediately below this current counting value, appearing in a table (15) of initial counting values, and
- a comparison step to compare this difference with a predetermined threshold.

## Patentansprüche

1. Verfahren zum Erzeugen von Datenpaketen durch eine eingangsseitige Vorrichtung, wobei die Datenpakete dazu bestimmt sind, über wenigstens eine durch ein Netz hergestellte Verbindung übertragen zu werden, das enthält:
- am Beginn einer Verbindung einen Schritt des Initialisierens des Wertes eines Zählers, der in der eingangsseitigen Vorrichtung vorhanden ist und für das Speichern einer Anzahl ausgesendeter Pakete geeignet ist, auf einen anfänglichen Zählwert,
- einen Schritt des Inkrementierens des Wertes dieses Zahlers bei jeder Erzeugung eines neuen Pakets und
- einen Schritt des Kopierens des momentanen Wertes dieses Zählers in den Kopfsatz des neuen Pakets,
wobei das Verfahren derart ist, dass der anfängliche Zählwert unter einer Gesamtheit vorgegebener Anfangswerte ausgewählt wird, derart, dass die Differenz zwischen zwei aufeinander folgenden Anfangswerten dieser Gesamtheit größer als ein vorgegebener Schwellenwert ist.

2. Verfahren nach Anspruch 1, **dadurch gekennzeichnet, dass** der momentane Wert des Zählers die Binärform eines Eintrags von n Bits hat, wobei die Gesamtheit der anfänglichen Zählwerte derart ist, dass ein Feld aus 1 1 Bits des Zählwertes, wobei 1 1 streng kleiner als n ist, systematisch auf Null initialisiert wird, wobei dieses Feld so positioniert wird, dass dann, wenn die Anzahl ausgesendeter Pakete den vorgegebenen Schwellenwert erreicht, wenigstens ein Bit dieses Feldes den Wert 1 annimmt.

3. Verfahren nach Anspruch 2, **dadurch gekennzeichnet, dass** das Feld aus 1 Bits zwischen einem Bit mit Rang m und einem Bit mit Rang m + 1 des Zählwertes positioniert wird und die anfänglichen Zählwerte größer als 2^{I+m} sind.

4. Verfahren nach Anspruch 3, **dadurch gekennzeichnet, dass** der vorgegebene Schwellenwert gleich 2^{m} - 1 ist.

5. Verfahren nach Anspruch 4, **dadurch gekennzeichnet, dass** die anfänglichen Zählwerte Vielfache von 2^{1+m} sind.

6. Verfahren nach Anspruch 4, **dadurch gekennzeichnet, dass** die niedrigstwertigen Bits der anfänglichen Zählwerte zufällig unter den Bits mit Rang kleiner als t gewählt werden, wobei t streng kleiner als m ist.

7. Verfahren nach Anspruch 6, **dadurch gekennzeichnet, dass** die Anzahl niedrigstwertiger Bits t der ganzzahlige Anteil des Logarithmus mit Basis 2 der in dem Netz zugelassenen maximalen Größe der Pakete ist.

8. Verfahren zum Klassifizieren von Datenpaketen, das von einer ausgangsseitigen Vorrichtung ausgeführt wird,
wobei die Pakete durch wenigstens eine eingangsseitige Vorrichtung (1) mittels eines Verfahrens zum Erzeugen von Paketen nach einem der Ansprüche 1 bis 7 erzeugt worden sind und dann über durch diese Netz hergestellte Verbindungen gesendet worden sind, wobei das Klassifizierungsverfahren enthält:
- einen Schritt des Empfangens jedes Pakets IP von jeder Verbindung durch die ausgangsseitige Vorrichtung (3a, 3b, 3c),
- einen Schritt des Vergleichens eines vorgegebenen Schwellenwerts für Mengen gesendeter Daten mit der Differenz zwischen dem in dem Kopfsatz eines empfangenen Pakets eingefügten momentanen Zählwert und dem unmittelbar darunter liegenden Anfangswert der Gesamtheit vorgegebener Anfangswerte, die für die Erzeugung von Paketen verwendet werden, durch die ausgangsseitige Vorrichtung (3a, 3b, 3c), um die Pakete, die Verbindungen entsprechen, über die weniger Daten als der vorgegebene Schwellenwert übertragen worden sind, in Bezug auf Pakete, die Verbindungen entsprechen, über die mehr Daten als der vorgegebene Schwellenwert übertragen worden sind, zu klassifizieren.

9. System zum Erzeugen von Datenpaketen in einer eingangsseitigen Vorrichtung, wobei die Datenpakete dazu bestimmt sind, über wenigstens eine durch ein Netz hergestellte Verbindung übertragen zu werden, wobei das System enthält:
- eine Informationsverarbeitungseinheit (9) und
- Informationsspeichermittel (10), die wenigstens einen Zähler (11) enthalten, der für das Speichern einer Anzahl gesendeter Pakete geeignet ist,
wobei die Informationsverarbeitungseinheit enthält:
- Mittel (9a) zum Initialisieren des Wertes dieses Zählers am Beginn einer Verbindung mit einem anfänglichen Zählwert,
- Mittel (9b) zum Inkrementieren des Wertes dieses Zählers bei jeder Erzeugung eines neuen Pakets und
- Mittel (9c) zum Kopieren des momentanen Wertes dieses Zählers in den Kopfsatz des neuen Pakets,
derart, dass die Initialisierungsmittel (9a) Mittel (9d) zum Auswählen des anfänglichen Zählwerts in einer Gesamtheit vorgegebener Anfangswerte enthalten, so dass die Differenz zwischen zwei aufeinander folgenden Anfangswerten dieser Gesamtheit viel größer als ein vorgegebener Schwellenwert ist.

10. System zum Erzeugen von Paketen nach Anspruch 9, **dadurch gekennzeichnet, dass** der momentane Zählwert die Binärform eines Eintrags von n Bits besitzt, wobei die Gesamtheit der anfänglichen Zählwerte derart ist, dass ein Feld aus 1 Bits des Zählwertes, wobei 1 eine ganze Zahl streng kleiner als n ist, systematisch bei 0 initialisiert wird.

11. System zum Erzeugen von Paketen nach Anspruch 10, **dadurch gekennzeichnet, dass** die Inkrementierungsmittel (9b) Mittel (9f) enthalten, um wenigstens ein Bit des Feldes aus 1 Bits auf den Wert eins zu setzen, wenn die Anzahl ausgesendeter Pakete den vorgegebenen Schwellenwert übersteigt.

12. System zur Verarbeitung von Datenpaketen, die über wenigstens eine durch ein Netz hergestellte Verbindung übertragen werden, wobei das System Mittel (12) zum Empfangen von Paketen von einer eingangsseitigen Vorrichtung und Informationsverarbeitungsmittel (14) enthält, wobei jedes Paket in seinem Kopf einen momentanen Zählwert hat,
derart, dass die Informationsverarbeitungsmittel (14) eine Tabelle (15) anfänglicher Zählwerte und Mittel (14a) zum Berechnen der Differenz zwischen dem momentanen Zählwert, der im Kopfsatz eines empfangenen Pakets vorhanden ist, und dem Anfangswert der Tabelle unmittelbar unterhalb dieses momentanen Zählwerts sowie Mittel (14b) zum Vergleichen dieser Differenz mit einem vorgegebenen Schwellenwert enthalten.

13. System zur Verarbeitung von Paketen nach Anspruch 12, **dadurch gekennzeichnet, dass** die Mittel zum Berechnen der Differenz und zum Vergleichen mit dem vorgegebenen Schwellenwert einen Vergleich mit Null eines Feldes aus 1 Bits des momentanen Zählwertes ausführen.

14. Verfahren zur Verarbeitung von Datenpaketen, die über wenigstens eine durch ein Netz hergestellte Verbindung übertragen werden, wobei das Verfahren einen Schritt (12) des Empfangens von Paketen von einer eingangsseitigen Vorrichtung enthält, wobei jedes Paket in seinem Kopfsatz einen momentanen Zählwert besitzt,
wobei das Verfahren derart ist, dass es enthält:
- einen Schritt des Berechnens der Differenz zwischen dem momentanen Zählwert, der im Kopfsatz eines empfangenen Pakets vorhanden ist, und dem Anfangswert unmittelbar unterhalb dieses momentanen Zählwerts, der in einer Tabelle (15) anfänglicher Zählwerte enthalten ist, durch die Informationsverarbeitungsmittel (14) und
- einen Schritt des Vergleichens dieser Differenz mit einem vorgegebenen Schwellenwert.
